# FASCICULE DE BREVET EUROPEEN

(11) **EP 2 435 676 B1**
(45) Date de publication et mention de la délivrance du brevet: **19.03.2014**
(21) Numéro de dépôt: 10729721.0
(22) Date de dépôt: 26.05.2010
(51) Int. Cl.: F02B 41/04, F02M 25/03, F02B 43/10, F02B 47/02, F02M 21/02, F02M 25/12

(54) **PROCEDE DE FONCTIONNEMENT D'UN MOTEUR A EXPLOSION ET MOTEUR A EXPLOSION SELON CE PROCEDE**
VERFAHREN FÜR DEN BETRIEB EINES VERBRENNUNGSMOTORS UND VERBRENNUNGSMOTOR GEMÄSS DIESEM VERFAHREN
METHOD FOR OPERATING AN INTERNAL COMBUSTION ENGINE, AND INTERNAL COMBUSTION ENGINE IN ACCORDANCE WITH SAID METHOD

(30) Priorité: 26.05.2009 FR 0953465
(43) Date de publication de la demande: 04.04.2012
(73) Titulaire: Wathieu, Patrick, Bruxelles (BE); Wathieu, Michèle, Bruxelles (BE)
(72) Inventeur: Wathieu, Patrick, Bruxelles (BE); Wathieu, Michèle, Bruxelles (BE)
(74) Mandataire: Nithardt, Roland
(86) Numéro de dépôt international: PCT/IB2010/001242
(87) Numéro de publication internationale: WO 2010/136879

(56) Documents cités:
- EP-A1- 0 405 919
- EP-A1- 1 826 366
- WO-A1-2005/119015
- DE-A1- 4 315 034
- DE-A1- 10 219 009
- JP-A- 2008 063 980

## Description

### Domaine technique

La présente invention concerne un procédé de fonctionnement d'un moteur à explosion à deux temps du type alternatif, comportant un réservoir d'eau, au moins un cylindre, un piston mobile selon un mouvement axial alternatif logé à l'intérieur de ce cylindre, ce piston ayant une tête et un bras articulé à cette tête, et au moins une soupape d'admission et une soupape d'échappement ménagées sur le cylindre au-dessus dudit piston, procédé dans lequel on utilise du dihydrogène gazeux.

Elle concerne également un moteur à explosion à deux temps du type alternatif, comportant un réservoir d'eau, au moins un cylindre, un piston mobile selon un mouvement axial alternatif logé à l'intérieur de ce cylindre, ce piston ayant une tête et un bras articulé à cette tête, au moins une soupape d'admission et au moins une soupape d'échappement ménagées sur le cylindre au-dessus dudit piston.

### Technique antérieure

Il existe de nombreux types de moteurs basés sur la combustion d'un carburant, notamment d'un carburant fossile. Le principe de fonctionnement de ces moteurs est bien connu, bien que des perfectionnements importants tendant à augmenter le rendement, diminuer la consommation et réduire la pollution, aient été apportés ces dernières années et restent encore à faire. On sait par ailleurs que de nombreuses sources d'énergie naturelles sont en raréfaction et principalement les réserves de carburants fossiles. En outre, l'agricufture dont les produits pourraient permettre de générer des huiles ou des éthanols, notamment de colza et de canne à sucre, doit avant tout permettre de nourrir la population humaine et animale. Actuellement, les ressources agricoles ne suffisent plus pour atteindre ces objectifs.

Il est donc avantageux de rechercher des sources d'énergie qui sont à la fois abondantes et qui ont l'avantage d'être renouvelables, pour subvenir aux besoins qui sont en constante croissance. Le soleil et le vent sont déjà largement utilisés pour produire de l'énergie électrique, mais il se pose le problème du stockage de cette énergie, ce qui réduit le champ de son utilisation.

L'eau douce peut représenter une solution attrayante, mais le réchauffement de la planète démontre que cette ressource risque également de se raréfier, parce qu'elle est indispensable en priorité pour subvenir aux besoins de la population humaine, de la vie animale et de la vie végétale.

En revanche, l'eau de mer représente 70% de la surface du globe et se régénère au gré des pluies et de la fonte des glaces. L'utilisation de l'eau de mer comme source énergétique peut représenter une alternative intéressante aux sources d'énergie actuelles, à condition de mettre au point un moyen simple, économique et efficace pour l'exploiter en vue de la production d'énergie.

Le moteur alternatif actuel, alimenté par des carburants fossiles ou des carburants synthétiques, qu'il soit à deux ou à quatre temps, représente encore aujourd'hui une des façons les plus efficaces de produire de l'énergie mécanique directement utilisable pour assurer toutes les fonctions d'entraînement, de propulsion, de traction ou similaires immédiatement exploitable. En effet, la pression exercée par une détonation sur la tête d'un piston d'un moteur de ce type, est sensiblement perpendiculaire à la surface de celui-ci et provoque son déplacement en générant le mouvement rotatif d'un arbre de sortie de ce moteur. Bien que les dispositifs rotatifs comme le moteur Wankel et la quasi-turbine aient été développés pour éviter l'obligation de transformer un mouvement alternatif en un mouvement rotatif, l'angle avec lequel la pression de l'explosion ou de la détente s'exerce est moins favorable que sur un moteur alternatif. On notera que la quasi-turbine offre un angle légèrement meilleur que celui du procédé Wankel.

L'un des inconvénients majeurs du moteur alternatif actuel est dû au fait que l'explosion qui génère un dégagement d'énergie intense, se produit alors que le piston est au point mort haut (PMH). A ce moment, le bras de levier défini par l'angle de la bielle et le centre du vilebrequin est le plus petit.

Pour que les conditions soient idéales, l'explosion, dans le moteur alternatif devrait intervenir alors que la bielle est horizontale par rapport à l'axe du vilebrequin, c'est-à-dire alors que le bras de levier est lui aussi maximal. Certains systèmes, tels le moteur pistolet, proposent de différer l'explosion afin que ses effets maximum interviennent alors que le piston du moteur alternatif correspondant a dépassé de plusieurs dizaines de degrés son point mort haut (PMH).

Il en résulte que les moteurs à explosion actuels, qui utilisent des carburants fossiles ou similaires, même s'ils sont relativement performants, ne permettent pas de produire de l'énergie mécanique dans des conditions optimales. En outre, l'utilisation des combustibles fossiles qui sont en voie d'épuisement, est destinée à s'arrêter dans un avenir relativement proche. Enfin, l'utilisation des combustibles fossiles est polluante puisqu'elle rejette des masses d'anhydride carbonique et des particules non brûlées, en partie responsables du réchauffement climatique et de la pollution de notre atmosphère.

La publication WO 2005/119015 décrit un moteur à hydrogène à quatre temps qui nécessite un premier cycle de fonctionnement dans lequel de l'air est aspiré pour être comprimé afin d'élever sa température. Cet air chaud est utilisé pour provoquer l'explosion d'un mélange vapeur d'eau et hydrogène injecté dans le cylindre lorsque le piston est au point mort haut lors d'un second cycle de fonctionnement. Lors de la remontée du piston à la fin du second cycle, la vapeur d'eau est évacuée par une soupape d'échappement, condense et peut être réutilisée pour un nouveau cycle. L'eau peut également servir à refroidir le moteur en la faisant circuler autour du piston.

Les publications DE 102 19 009 et JP 2008 063980 décrivent des moteurs à hydrogène à deux temps dans lesquels le mélange air et hydrogène est comprimé dans le cylindre du piston et l'explosion du mélange est générée au point mort haut du piston par une bougie d'allumage.

Ces solutions dites écologiques ne sont pas optimales car elles nécessitent toutes une phase de compression qui est consommatrice d'énergie.

### Exposé de l'invention

La présente invention propose une alternative qui a pour objectif de supprimer la pollution des gaz d'échappement habituellement produits par les moteurs thermiques actuels, en offrant un moteur à explosion, dont le fonctionnement est optimisé de telle manière que l'énergie produite au cours du cycle de fonctionnement est utilisée au mieux pour générer des forces mécaniques, tout en supprimant l'utilisation de combustibles fossiles difficiles et dangereux à extraire, et en utilisant des substances indéfiniment renouvelables sur la planète.

Dans ce but, le procédé selon l'invention est caractérisé en ce qu'il comporte les étapes de la partie caractérisante de la revendication 1:

De façon avantageuse, le procédé comporte une étape préliminaire au cours de laquelle on produit, par électrolyse de l'eau dudit réservoir, du dihydrogène gazeux dont on prélève au moins volume prédéterminé au cours de ladite première étape de fonctionnement du moteur.

Au cours de ladite étape préliminaire, l'on utilise de préférence de l'eau salée contenue dans ledit réservoir pour produire du dihydrogène gazeux par électrolyse et refroidir le moteur.

Lesdites première, deuxième et troisième étapes de fonctionnement s'effectuent selon l'invention pendant que ledit piston passe du point mort haut (PMH) au point mort bas (PMB) et en ce que ladite quatrième étape de fonctionnement s'effectue pendant que ledit piston passe du point mort bas (PMB) au point mort haut (PMH).

D'une manière particulièrement avantageuse, ledit moteur comporte plusieurs cylindres comprenant chacun un piston logé dans un desdits cylindres, et l'on effectue l'ensemble des première, deuxième, troisième et quatrième étapes, individuellement dans chacun des cylindres dudit moteur, chacune desdites étapes effectuées dans l'un des cylindres étant décalée dans le temps par rapport à l'étape correspondante effectuée dans un autre desdits cylindres dudit moteur.

Dans ce but également, l'invention concerne un moteur à explosion à deux temps selon les caractéristiques de la revendication 6:

Le moteur comporte de préférence des moyens pour produire par électrolyse de l'eau contenue dans ledit réservoir, du dihydrogène gazeux.

Dans une variante de réalisation, la production du dihydrogène gazeux peut comporter des moyens pour effectuer de l'électrolyse à haute température.

D'une manière préférentielle, ledit réservoir contient de l'eau salée pour produire du dihydrogène gazeux par électrolyse.

Selon une forme de réalisation avantageuse, lesdits moyens pour admettre au cours d'une première étape un volume prédéterminé de dihydrogène gazeux comportent un injecteur.

En outre, lesdits moyens pour admettre au cours d'une première étape un volume prédéterminé d'un mélange gazeux contenant de l'oxygène, comportent une soupape d'admission.

Les moyens pour injecter un volume prédéterminé d'eau dudit réservoir dans ledit cylindre peuvent comporter un injecteur associé à une pompe d'injection.

Dans le cas d'un moteur ayant plusieurs cylindres comprenant chacun un piston logé dans un de ces cylindres, il comporte avantageusement des moyens de commande pour que, dans chacun des cylindres, les étapes correspondant à l'un des cylindres soient décalées dans le temps par rapport aux étapes correspondantes dans chacun des autres cylindres.

### Description sommaire des dessins

La présente invention et ses avantages apparaîtront mieux dans la description suivante d'un mode de réalisation donné à titre d'exemple non limitatif, en référence aux dessins annexés, dans lesquels:
- la figure 1 représente une vue de principe illustrant le moteur selon l'invention,
- la figure 2 est une vue qui illustre une première phase du cycle de fonctionnement du moteur de la figure 1,
- la figure 3 est une vue qui illustre une deuxième phase du cycle de fonctionnement du moteur de la figure 1,
- la figure 4 est une vue qui illustre une troisième phase du cycle de fonctionnement du moteur de la figure 1, et
- la figure 5 est une vue qui illustre une quatrième phase du cycle de fonctionnement du moteur de la figure 1.

### Meilleure manière de réaliser l'invention

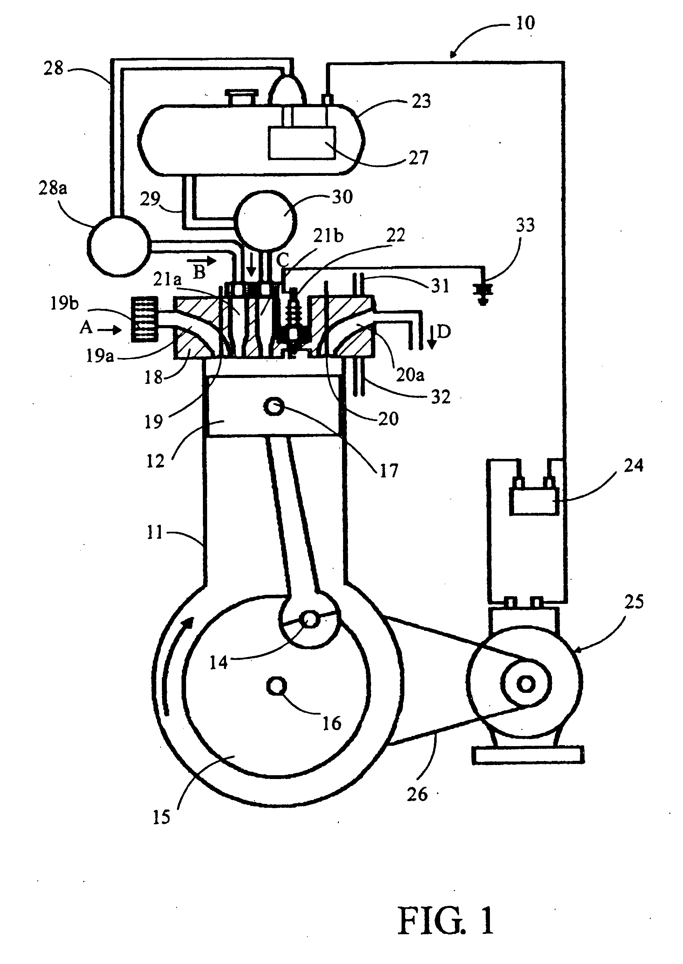

En référence à la figure 1, le moteur à explosion 10 tel que représenté schématiquement, dans une première version simplifiée, comporte un cylindre unique 11 dans lequel est logé un piston 12 à déplacement linéaire alternatif, solidaire d'une bielle 13 montée en rotation à une de ses extrémités 14 sur un volant 15, rotatif et porté par un arbre central 16, cette bielle 13 étant par ailleurs montée articulée à son extrémité opposée 17 sur le piston 12. Au-dessus du cylindre 11 le bloc du moteur 10 comprend une culasse 18 dans laquelle sont logés notamment une soupape d'admission 19, une soupape d'échappement 20, un premier injecteur 21 a, un deuxième injecteur 21 b et une bougie d'allumage 22, ou similaire, dont les fonctions seront définies ci-après. La soupape d'admission 19 est montée dans la culasse 18 à l'embouchure d'une tubulure d'admission 19a sur laquelle est monté un filtre à air 19b.

Le moteur 10 est associé à un réservoir 23 d'eau, par exemple d'eau salée, à une batterie d'accumulateurs 24 et à un alternateur 25, entraîné par le volant 15, par exemple par une courroie 26, pour recharger les accumulateurs 24. Dans l'exemple de réalisation décrit, le réservoir 23 contient un dispositif d'électrolyse 27, agencé pour produire du dihydrogène gazeux par électrolyse de l'eau salée contenue dans le réservoir 23. Il est évident que ce dispositif d'électrolyse 27 pourrait également être placé à l'extérieur du réservoir 23. Le dispositif d'électrolyse 27 est connecté au moyen d'un circuit d'alimentation 28 en dihydrogène à l'injecteur 21a par l'intermédiaire d'une pompe d'injection 28a montée sur le circuit d'alimentation 28. Par ailleurs le réservoir 23 est connecté par un circuit d'alimentation 29 en eau à une pompe à injection 30 couplée à l'injecteur 21b agencée pour injecter de l'eau sous pression dans l'espace délimité par le haut du piston 12 et le haut du cylindre 11.

En cours de fonctionnement, on produit de préférence, au cours d'une étape préliminaire, une faible quantité de dihydrogène gazeux par électrolyse et on alimente le moteur 10 pendant une première étape, en injectant un volume prédéterminé de ce gaz au moyen du circuit d'alimentation 28 connecté à la à l'injecteur 21a. Le dihydrogène est utilisé comme carburant et l'on rajoute de l'air ou de l'oxygène comme comburant au moyen de la tubulaire d'admission 19a débouchant dans l'espace délimité par le haut du piston 12 et le haut du cylindre 11 par la soupape d'admission 19. Au cours d'une autre étape de fonctionnement, on injecte de l'eau salée, à l'état liquide à travers le circuit d'alimentation 29 qui relie le bas du réservoir 23 à l'injecteur 21b par l'intermédiaire de la pompe d'injection 30.

A titre de variante, le dihydrogène gazeux nécessaire au fonctionnement du moteur 10 peut être produit selon un procédé d'électrolyse à haute température, ce qui nécessite un dispositif annexe de circulation de l'eau. Cet équipement qui implique des moyens pour vaporiser de l'eau en provenance du réservoir 23 est représenté par des conduits 31 et 32 débouchant dans la culasse 18.

La bougie d'allumage 22 classique utilisée dans les moteurs à explosion, qui nécessite habituellement un ensemble bobine-rupteur, peut être remplacée dans ce cas par un système piézo-électrique qui a l'avantage de la faible consommation électrique. Cette alimentation est représentée schématiquement et porte la référence 33. Cette solution peut être appliquée parce que l'explosion de l'hydrogène ne nécessite qu'une très faible énergie pour se déclencher.

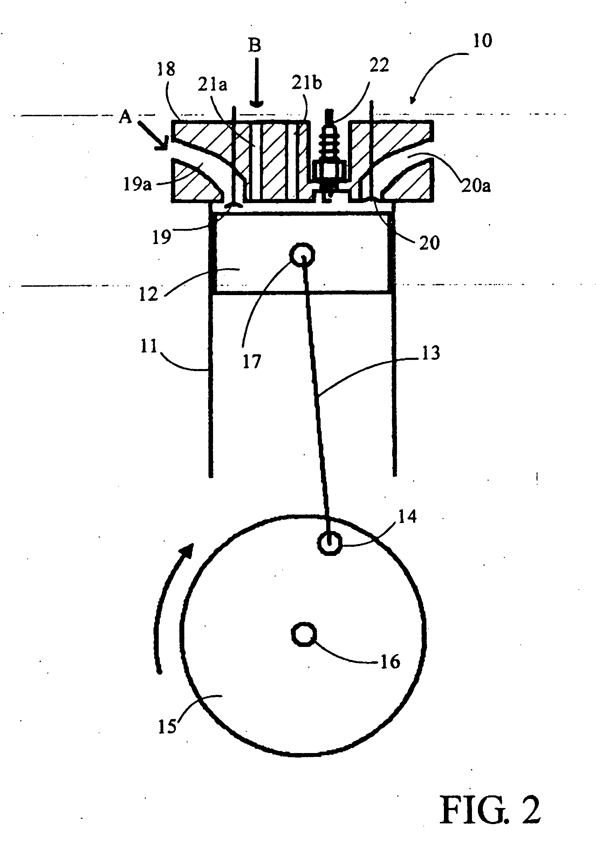

Les étapes du fonctionnement du moteur seront décrites plus en détail en référence aux figures 2 à 5, qui illustrent les principes du procédé de l'invention. La figure 2 illustre une première étape au cours de laquelle un volume d'air est aspiré au haut (sur la figure) du cylindre 11 comme le montre la flèche A, cette aspiration étant due à la dépression qui est produite dans le cylindre 11 au moment de la descente du piston 12. De façon légèrement décalée, un volume prédéterminé de dihydrogène gazeux produit par électrolyse au cours d'une étape préliminaire, est injecté au haut (sur la figure) du cylindre 11 à travers l'injecteur 21a, comme le montre la flèche B. De ce fait, l'espace entre le haut du piston 12 et le haut du cylindre 11 est rempli d'un mélange explosif de dihydrogène gazeux et d'air.

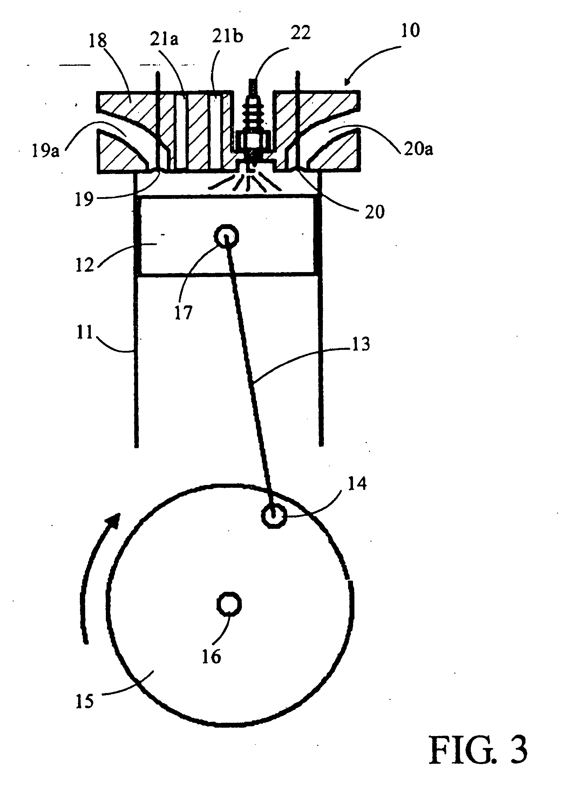

La figure 3 illustre la deuxième étape au cours de laquelle on provoque l'explosion du mélange de dihydrogène gazeux et d'air au moyen d'une étincelle produite par la bougie d'allumage 22. Cette explosion a pour effet de générer une force de poussée sur le piston 12, provoquant son déplacement vers le bas (sur la figure) en entraînant le volant 15 grâce au couplage du piston 12 et du volant 15 par la bielle 13.

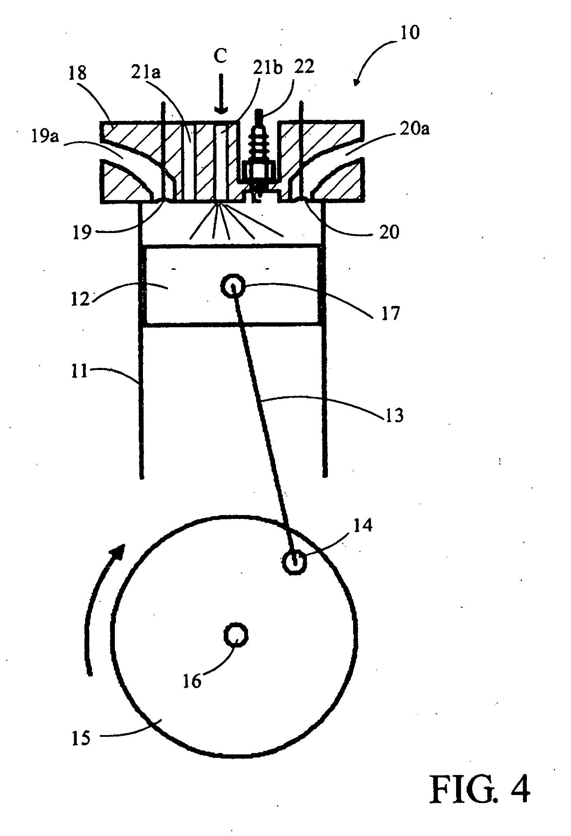

L'étape suivante, illustrée par la figure 4 consiste à injecter au moyen de l'injecteur 21 b, une certaine quantité d'eau prélevée dans le réservoir 23, dans l'espace situé entre le piston 12 et le haut du cylindre 11. L'alimentation de l'injecteur 21b est représentée schématiquement par la flèche C. Cet espace ayant été porté à très haute température au cours de l'étape précédente par l'explosion du mélange gazeux, l'eau injectée se vaporise instantanément en se transformant en vapeur d'eau sous très haute pression. Cette pression contribue à refouler le piston 12 vers le bas (sur la figure) du cylindre et à générer un couple important d'entraînement du volant 15.

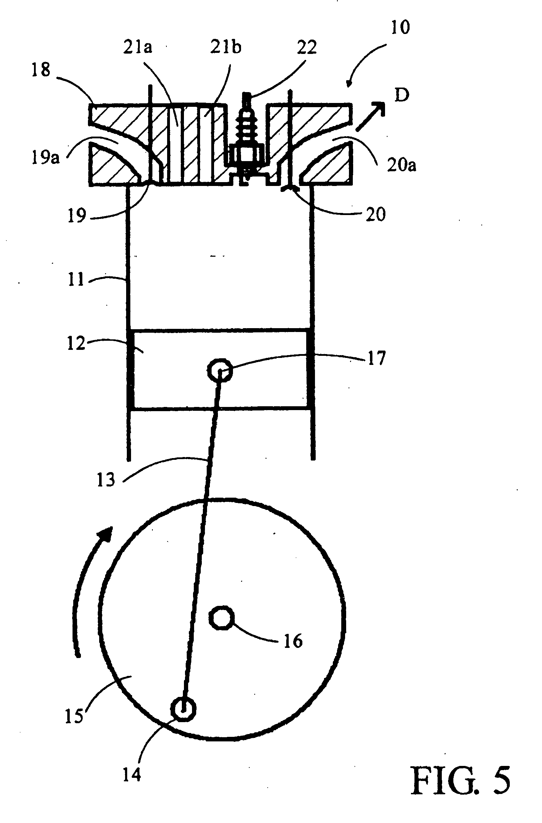

Grâce aux poussées conjuguées dues à l'explosion du mélange de dihydrogène gazeux et d'air ou d'oxygène combinée à l'expansion de la vapeur d'eau produite dans le cylindre 11, le volant 15 tourne en entraînant le piston 12 d'abord du point mort haut (PMH) vers le point mort bas (PMB), puis au-delà du point mort bas (PMB). Une étape d'évacuation des gaz contenus dans le cylindre 11 est entamée pendant la « remontée » du piston 12. Cette étape est représentée par la figure 5. Les gaz d'échappement sont évacués à travers la soupape d'échappement 20 et la tubulure d'échappement 20a, comme le montre la flèche D.

On notera que le moteur 10 est du type à deux temps, ce qui le rend particulièrement efficace puisque, à chaque étape active qui correspond à la descente du piston 12 sous l'effet d'une poussée générée sur la tête dudit piston 12, ne correspond qu'une phase réactive qui correspond à la remontée du piston 12 et à l'échappement des gaz.

L'électrolyse de l'eau, notamment de l'eau salée et par exemple de l'eau de mer, sert à générer un faible volume de dihydrogène gazeux, puisque la partie la plus importante de la force de poussée est produite par la vaporisation instantanée de l'eau injectée dans le cylindre. De ce fait, un générateur électrique, par exemple un alternateur faiblement dimensionné est suffisant pour produire l'énergie électrique nécessaire. En outre, l'injection de l'eau a pour effet secondaire de refroidir le cylindre 11 en évitant ainsi d'injecter le dihydrogène gazeux à une température supérieure à sa température d'auto-allumage qui est de l'ordre de 550°C. Etant donné que la température atteinte au moment de l'explosion du mélange gazeux est très élevée, une seule injection d'eau peut ne pas être suffisante pour refroidir le moteur de façon appropriée. Dans ce cas, un deuxième, voire plusieurs cycles pourraient être effectués sans explosion de mélange gazeux explosif, et le moteur pourrait tourner comme une simple machine à vapeur. La vapeur est générée par la chaleur résiduelle de l'explosion du mélange gazeux et l'injection contrôlée d'eau en haut du cylindre à chaque début de cycle. A cet effet des capteurs de température et de pression adéquats sont agencés pour fournir les informations à une unité de commande centrale qui pilote les injecteurs et les soupapes.

Bien que le moteur 10 décrit ne comporte qu'un seul cylindre 11, le moteur à explosion de l'invention peut être pourvu de plusieurs cylindres montés en parallèle et qui ont des modes opératoires similaires. Dans ce cas, le moteur 10 serait pourvu d'un vilebrequin couplé aux différentes bielles des différents pistons. Les phases de fonctionnement de chacun des pistons, de chacun des cylindres sont dans ce cas identiques. Toutefois les différents pistons sont décalés les uns par rapport aux autres et les étapes de fonctionnement sont également décalées de manière à optimiser les couples exercés sur le vilebrequin.

En outre, le moteur 10 tel que décrit peut subir diverses modifications et se présenter sous diverses variantes couvertes par l'invention. Un des avantages fondamentaux du moteur de l'invention réside dans le fait que le dihydrogène gazeux, dont le stockage est habituellement considéré comme risqué, est consommé directement au moment de sa production, ce qui supprime intégralement les risques inhérents au stockage. Le volume produit au cours des étapes préliminaires est pratiquement consommé au cours des premières étapes de chaque cycle de fonctionnement du moteur. Les gaz d'échappement produits sont de la vapeur d'eau et de l'air. Le fonctionnement est économique et non polluant.

## Revendications

1. Procédé de fonctionnement d'un moteur (10) à explosion à deux temps du type alternatif, comportant un réservoir d'eau (23), au moins un cylindre (11), un piston (12) mobile selon un mouvement axial alternatif logé à l'intérieur de ce cylindre, ce piston ayant une tête et un bras articulé à cette tête, et au moins une soupape d'admission (19) et une soupape d'échappement (20) ménagées sur le cylindre (11) au-dessus dudit piston (12), procédé dans lequel on utilise du dihydrogène gazeux, **caractérisé en ce que** le procédé comporte les étapes suivantes :
a.- une première étape au cours de laquelle on admet dans un espace dudit cylindre (11) localisé au-dessus de la tête dudit piston (12) un volume prédéterminé de dihydrogène gazeux et un volume prédéterminé d'un mélange gazeux contenant de l'oxygène;
b.- une deuxième étape au cours de laquelle on provoque par des moyens d'allumage (22) l'explosion du mélange de dihydrogène gazeux et de l'oxygène introduit dans le cylindre (11), au moment où le piston (12) a dépassé le point mort haut (PMH) ;
c.- au moins une troisième étape au cours de laquelle on injecte un volume prédéterminé d'eau dudit réservoir (23) dans ledit cylindre (11), dans un espace disposé au-dessus dudit piston (12), pour transformer instantanément cette eau en vapeur d'eau sous très haute pression sous l'effet de la chaleur produite par l'explosion du mélange de dihydrogène gazeux et d'oxygène contribuant à générer un couple important et pour refroidir le moteur; et
d.- une quatrième étape au cours de laquelle on évacue la vapeur d'eau produite par évaporation de l'eau injectée et par la combustion du dihydrogène gazeux,
dans lesquelles lesdites première, deuxième et troisième étapes de fonctionnement s'effectuent pendant que ledit piston (12) passe du point mort haut (PMH) au point mort bas (PMB), tandis que ladite quatrième étape de fonctionnement s'effectue pendant que ledit piston (12) passe du point mort bas (PMB) au point mort haut (PMH).

2. Procédé selon la revendication 1, **caractérisé en ce qu'**il comporte une étape préliminaire au cours de laquelle on produit, par électrolyse d'un volume déterminé d'eau dudit réservoir (23), du dihydrogène gazeux dont on prélève au moins un volume prédéterminé au cours de ladite première étape.

3. Procédé selon la revendication 2, **caractérisé en ce que** l'électrolyse de l'eau dudit réservoir (23) s'effectue selon un procédé d'électrolyse à haute température.

4. Procédé selon la revendication 2, **caractérisé en ce qu'**au cours de ladite étape préliminaire, l'on utilise de l'eau salée pour produire du dihydrogène gazeux par électrolyse.

5. Procédé selon la revendication 1, mis en oeuvre par un moteur (10) ayant plusieurs cylindres (11) comprenant chacun un piston (12) logé dans un desdits cylindres, **caractérisé en ce que** l'on effectue l'ensemble des première, deuxième, troisième et quatrième étapes, individuellement dans chacun des cylindres (11) dudit moteur (10), chacune desdites étapes effectuées dans l'un des cylindres (11) étant décalée dans le temps par rapport à l'étape correspondante effectuée dans un autre desdits cylindres (11) dudit moteur (10).

6. Moteur à explosion à deux temps du type alternatif (10), comportant un réservoir d'eau (23), au moins un cylindre (11), un piston mobile (12) selon un mouvement axial alternatif logé à l'intérieur de ce cylindre, ce piston ayant une tête et un bras articulé à cette tête, au moins une soupape d'admission (19) et au moins une soupape d'échappement (20) ménagées sur le cylindre au-dessus dudit piston, **caractérisé en ce qu'**il comporte :
a.- des moyens (19, 19a, 21a) pour admettre au cours d'une première étape, dans ledit cylindre (11), dans un espace localisé au-dessus de la tête dudit piston (12), un volume prédéterminé de dihydrogène gazeux et un volume prédéterminé d'un mélange gazeux contenant de l'oxygène,
b.- des moyens d'allumage (22) pour provoquer, au cours d'une deuxième étape, l'explosion du mélange de dihydrogène gazeux et d'oxygène admis dans le cylindre (11), au moment où le piston (12) a dépassé le point mort haut (PMH),
c.- des moyens (21b) pour injecter au cours d'au moins une troisième étape, un volume prédéterminé d'eau dudit réservoir (23), dans ledit cylindre (11), dans un espace disposé au-dessus dudit piston (12), pour transformer instantanément cette eau en vapeur d'eau sous très haute pression sous l'effet de la chaleur produite par l'explosion du dihydrogène gazeux et d'oxygène contribuant à générer un couple important et pour refroidir le moteur, et
d.- des moyens (20, 20a) pour évacuer au cours d'une quatrième étape, la vapeur d'eau produite par évaporation de l'eau injectée et la combustion du dihydrogène gazeux, dans lequel lesdites première, deuxième et troisième étapes de fonctionnement s' effectuent pendant que ledit piston (12) passe du point mort haut (PMH) au point mort bas (PMB), ladite quatrième étape de fonctionnement s'effectue pendant que ledit piston (12) passe du point mort bas (PMB) au point mort haut (PMH).

7. Moteur selon la revendication 6, **caractérisé en ce qu'**il comporte des moyens (27) pour produire par électrolyse de l'eau dudit réservoir (23), du dihydrogène gazeux.

8. Moteur selon la revendication 7, **caractérisé en ce que** ledit réservoir d'eau (23) contient de l'eau salée pour produire du dihydrogène gazeux par électrolyse.

9. Moteur selon la revendication 7, **caractérisé en ce que** lesdits moyens pour produire le dihydrogène gazeux sont des moyens pour effectuer de l'électrolyse à haute température.

10. Moteur selon la revendication 6, **caractérisé en ce que** lesdits moyens pour admettre au cours d'une première étape un volume prédéterminé de dihydrogène gazeux comporte un injecteur (21a).

11. Moteur selon la revendication 6, **caractérisé en ce que** lesdits moyens pour admettre au cours d'une première étape un volume prédéterminé d'un mélange gazeux contenant de l'oxygène, comporte une soupape d'admission (19) associée à une tubulure d'admission (19a).

12. Moteur selon la revendication 6, **caractérisé en ce que** lesdits moyens pour injecter un volume prédéterminé d'eau dans ledit cylindre (11) comportent un injecteur (21b) connecté à travers une pompe d'injection (30) au réservoir d'eau (23).

13. Moteur selon la revendication 6, ce moteur ayant plusieurs cylindres (11) comprenant chacun un piston (12) logé dans le cylindre, **caractérisé en ce qu'**il comporte des moyens de commande pour que, dans chacun des cylindres (11), les étapes correspondant à l'un des cylindres soient décalées dans le temps par rapport aux étapes correspondantes dans chacun des autres cylindres.

## Patentansprüche

1. Verfahren für den Betrieb eines Zweitakt-Hubkolbenverbrennungsmotors (10) bestehend aus zumindest einem Wassertank (23), zumindest einem Zylinder (11), einem in diesem Zylinder untergebrachten, in einer axialen Hin-und-Her-Bewegung beweglichen Kolben (12), wobei dieser Kolben einen Kopf und einen mittels eines Gelenks mit diesem Kopf verbundenen Arm beträgt, und zumindest einem Einlassventil (19) und einem Auslassventil (20), die beide auf dem Zylinder (11) oberhalb des besagten Kolbens (12) angeordnet sind, Verfahren in dem man gasförmiges Dihydrogen verwendet, **dadurch gekennzeichnet, dass** das Verfahren aus folgenden Schritten besteht:
a.- ein erster Schritt, in dem man in einem oberhalb des Kopfes des besagten Kolbens (12) befindlichen Raum des besagten Zylinders (11) ein vorbestimmtes Volumen gasförmiges Dihydrogen und ein vorbestimmtes Volumen eines Sauerstoff enthaltenden Gasgemischs einlässt;
b.- ein zweiter Schritt, in dem man mittels Zündmitteln (22) die Explosion der in den Zylinder (11) eingebrachten Mischung aus dem gasförmigen Dihydrogen und dem Sauerstoff auslöst, zum Zeitpunkt als der Kolben (12) den oberen Totpunkt (OT) überfahren hat;
c.- zumindest ein dritter Schritt, in dem man ein vorbestimmtes Volumen Wasser aus dem besagten Tank (23) in den besagten Zylinder (11) einspritzt, in einem oberhalb des besagten Kolbens (12) befindlichen Raum, um durch die von der Explosion der Mischung aus gasförmigem Dihydrogen und Sauerstoff erzeugten Wärme dieses Wasser augenblicklich in Dampf unter sehr hohem Druck umzuwandeln, wobei zur Erzeugung eines hohen Drehmoments beigetragen und der Motor abgekühlt wird; und
d.- ein vierter Schritt, in dem man den durch die Verdampfung des eingespritzten Wassers und die Verbrennung des gasförmigen Dihydrogens erzeugten Dampf ablässt,
bei welchen der besagte erste, zweite und dritte Betriebs-Schritt stattfindet während der besagte Kolben (12) vom oberen Totpunkt (OT) zum unteren, Totpunkt (UT) fährt, während der vierte Betriebs-Schritt stattfindet, während der besagte Kolben (12) vom unteren Totpunkt (UT) zum oberen Totpunkt (OT) fährt.

2. Verfahren nach Anspruch 1, **dadurch gekennzeichnet, dass** es einen vorhergehenden Schritt beträgt, in dem man durch Elektrolyse eines bestimmten Volumens Wasser aus dem besagten Tank (23) gasförmiges Dihydrogen erzeugt, wovon man während des besagten ersten Schritts zumindest ein vorbestimmtes Volumen entnimmt.

3. Verfahren nach Anspruch 2, **dadurch gekennzeichnet, dass** die Elektrolyse des Wassers aus dem besagten Tank (23) nach einem Hochtemperatur-Elektrolyseverfahren erfolgt.

4. Verfahren nach Anspruch 2, **dadurch gekennzeichnet, dass** man während des besagten vorhergehenden Schritts Salzwasser verwendet, um durch Elektrolyse gasförmiges Dihydrogen zu erzeugen,

5. Verfahren nach Anspruch 1, eingesetzt in einem Motor (10) mit mehreren Zylindern (11), die jeweils einen in einem der besagten Zylinder untergebrachten Kolben (12) betragen, **dadurch gekennzeichnet, dass** man die Gänze des ersten, zweiten, dritten und vierten Schritts individuell in jedem der Zylinder (11) des besagten Motors (10) durchführt, wobei jeder der in einem der Zylinder (11) durchgeführten besagten Schritte in Bezug auf den in einem anderen der besagten Zylinder (11) des besagten Motors (10) durchgeführten entsprechenden Schritt zeitlich versetzt ist.

6. Zweitakt-Hubkolbenverbrennungsmotor (10) bestehend aus einem Wassertank (23), zumindest einem Zylinder (11), einem in diesem Zylinder untergebrachten, in einer axialen Hin-und-Her-Bewegung beweglichen Kolben (12), wobei dieser Kolben einen Kopf und einen mittels eines Gelenks mit diesem Kopf verbundenen Arm beträgt, zumindest ein Einlassventil (19) und zumindest ein Auslassventil (20), die beide auf dem Zylinder oberhalb des besagten Kolbens angeordnet sind, **dadurch gekennzeichnet, dass** er folgende Mittel beträgt :
a.- Mittel (19, 19a, 21 a) um während eines ersten Schritts ein vorbestimmtes Volumen gasförmiges Dihydrogen und ein vorbestimmtes Volumen eines Sauerstoff enthaltenden Gasgemischs in einen oberhalb des Kopfes des besagten Kolbens (12) befindlichen Raum des besagten Zylinders (11) einzulassen,
b.- Zündmittel (22) um während eines zweiten Schritts die Explosion der in den Zylinder (11) eingebrachten Mischung aus dem gasförmigen Dihydrogen und dem Sauerstoff auszulösen, zum Zeitpunkt als der Kolben (12) den oberen Totpunkt (OT) überfahren hat,
c.- Mittel (21 b) um während zumindest eines dritten Schritts ein vorbestimmtes Volumen Wasser aus dem besagten Tank (23) in den besagten Zylinder (11) einzuspritzen, in einen oberhalb des besagten Kolbens (12) befindlichen Raum, um durch die von der Explosion der Mischung aus gasförmigem Dihydrogen und Sauerstoff erzeugten Wärme dieses Wasser augenblicklich in Dampf unter sehr hohem Druck umzuwandeln, wobei zur Erzeugung eines hohen Drehmoments beigetragen und der Motor abgekühlt wird, und
d.- Mittel (20, 20a) um während eines vierten Schritts den durch die Verdampfung des eingespritzten Wassers und die Verbrennung des gasförmigen Dihydrogens erzeugten Dampf abzulassen,
bei welchem der besagte erste, zweite und dritte Betriebs-Schritt stattfindet während der besagte Kolben (12) vom oberen Totpunkt (OT) zum unteren, Totpunkt (UT) fährt und der vierte Betriebs-Schritt stattfindet, während der besagte Kolben (12) vom unteren Totpunkt (UT) zum oberen Totpunkt (OT) fährt.

7. Motor nach Anspruch 6, **dadurch gekennzeichnet, dass** er Mittel (27) beträgt, um durch Elektrolyse des Wassers aus dem besagten Tank (23) gasförmiges Dihydrogen zu erzeugen.

8. Motor nach Anspruch 7, **dadurch gekennzeichnet, dass** der besagte Wassertank (23) Salzwasser enthält, um durch Elektrolyse gasförmiges Dihydrogen zu erzeugen.

9. Motor nach Anspruch 7, **dadurch gekennzeichnet, dass** die besagten Mittel zur Erzeugung des gasförmigen Dihydrogens Mittel zur Durchführung einer Hochtemperatur-Elektrolyse sind.

10. Motor nach Anspruch 6, **dadurch gekennzeichnet, dass** die besagten Mittel um während eines ersten Schritts ein vorbestimmtes Volumen gasförmiges Dihydrogen einzulassen eine Einspritzdüse (21a) betragen.

11. Motor nach Anspruch 6, **dadurch gekennzeichnet, dass** die besagten Mittel um während eines ersten Schritts ein vorbestimmtes Volumen eines Sauerstoff enthaltenden Gasgemischs einzulassen ein mit einem Ansaugrohr (19a) zusammenwirkendes Einlassventil (19) betragen.

12. Motor nach Anspruch 6, **dadurch gekennzeichnet, dass** die besagten Mittel um ein vorbestimmtes Volumen Wasser in den besagten Zylinder (11) einzuspritzen eine über eine Einspritzpumpe (30) mit dem Wassertank (23) verbundene Einspritzdüse (21b) betragen.

13. Motor nach Anspruch 6, wobei dieser Motor mehrere Zylinder (11) beträgt, die jeweils einen in dem Zylinder untergebrachten Kolben (12) betragen, **dadurch gekennzeichnet, dass** er Steuermittel beträgt, damit in jedem der Zylinder (11), die einem Zylinder entsprechenden Schritte in Bezug auf die entsprechenden Schritte in jedem der anderen Zylinder (11) zeitlich versetzt sind.

## Claims

1. Method for operating a two-stroke reciprocating internal combustion engine (10) comprising a water tank (23), at least one cylinder (11), a piston (12) that can perform an axial reciprocating movement housed inside this cylinder, this piston including a head and an arm hinged to this head, and at least one intake valve (19) and one exhaust valve (20) provided on the cylinder (11) above said piston (12), method using gaseous dihydrogen, **characterized in that** the method includes the following steps:
a.- a first step, during which a predetermined volume of gaseous dihydrogen and a predetermined volume of a gaseous mix containing oxygen are fed into a space of said cylinder (11) located above the head of said piston (12);
b.- a second step, during which the mix of gaseous dihydrogen and oxygen fed into the cylinder (11) is made to explode upon being ignited by ignition means (22) at the moment when the piston (12) has passed the top dead centre (TDC);
c.- at least one third step, during which a predetermined volume of water from said tank (23) is injected into said cylinder (11), into a space located above said piston (12), to vaporize instantaneously this water into high-pressure steam under the influence of the heat produced by the explosion of the mix of gaseous dihydrogen and oxygen to generate a high driving torque and to cool down the engine; and
d.- a fourth step, during which the steam produced by the evaporation of the injected water and the combustion of the gaseous dihydrogen is exhausted,
in which said first, second and third steps of the operation take place while said piston (12) passes from the top dead centre (TDC) to the bottom dead centre (BDC), while said fourth step of the operation takes place while said piston (12) passes from the bottom dead centre (BDC) to the top dead centre (TDC).

2. Method according to claim 1, **characterized in that** it includes a preliminary step, during which, by electrolysis of a determined volume of water of said tank (23), gaseous dihydrogen is produced, of which at least a predetermined volume is taken during said first step.

3. Method according to claim 2, **characterized in that** the electrolysis of the water of said tank (23) is performed according to a high-temperature electrolysis process.

4. Method according to claim 2, **characterized in that** salt water is used during said preliminary step to produce gaseous dihydrogen by electrolysis.

5. Method according to claim 1, implemented by an engine (10) having several cylinders (11), each including a piston (12) housed in one of said cylinders, **characterized in that** the whole of the first, second, third and fourth steps are performed individually in each of the cylinders (11) of said engine (10), each of said steps performed in one of the cylinders (11) being shifted in time with respect to the corresponding step performed in another of said cylinders (11) of said engine (10).

6. A two-stroke reciprocating internal combustion engine (10), comprising a water tank (23), at least one cylinder (11), a piston (12) that can perform an axial reciprocating movement housed inside this cylinder, this piston including a head and an arm hinged to this head, at least one intake valve (19) and at least one exhaust valve (20) provided on the cylinder above said piston, **characterized in that** it includes:
a.- means (19, 19a, 21 a) for feeding, during a first step, a predetermined volume of gaseous dihydrogen and a predetermined volume of a gaseous mix containing oxygen into said cylinder (11), into a space located above the head of said piston (12),
b.- ignition means (22) for producing, during a second step, the explosion of the mix of gaseous dihydrogen and oxygen fed into the cylinder (11), at the moment when the piston (12) has passed the top dead centre (TDC),
c.- means (21b) for injecting, during at least one third step, a predetermined volume of water of said tank (23) into said cylinder (11), into a space located above said piston (12), to vaporize instantaneously this water into high-pressure steam under the influence of the heat produced by the explosion of the gaseous dihydrogen and the oxygen to generate a high driving torque and to cool down the engine, and
d.- means (20, 20a) for exhausting, during a fourth step, the steam produced by the evaporation of the injected water and the combustion of the gaseous dihydrogen,
in which said first, second and third steps of the operation take place while said piston (12) passes from the top dead centre (TDC) to the bottom dead centre (BDC), while said fourth step of the operation takes place while said piston (12) passes from the bottom dead centre (BDC) to the top dead centre (TDC).

7. Engine according to claim 6, **characterized in that** it comprises means (27) for producing gaseous dihydrogen through the electrolysis of the water contained in said tank (23).

8. Engine according to claim 7, **characterized in that** said water tank (23) contains salt water for producing gaseous dihydrogen by electrolysis.

9. Engine according to claim 7, **characterized in that** said means for producing the gaseous dihydrogen are means for performing high-temperature electrolysis.

10. Engine according to claim 6, **characterized in that** said means for feeding during a first step a predetermined volume of gaseous dihydrogen comprise an injector (21 a).

11. Engine according to claim 6, **characterized in that** said means for feeding during a first step a predetermined volume of a gaseous mix containing oxygen, comprises an intake valve (19) associated with an intake piping (19a).

12. Engine according to claim 6, **characterized in that** said means for injecting a predetermined volume of water into said cylinder (11) comprise an injector (21b) connected through an injection pump (30) with the water tank (23).

13. Engine according to claim 6, this engine having several cylinders (11), each comprising a piston (12) housed in a cylinder, **characterized in that** it includes control means so that, in each of the cylinders (11), the steps corresponding to one of the cylinders are shifted in time with respect to the corresponding steps in each of the other cylinders.
